# EUROPEAN PATENT APPLICATION

(11) **EP 4 831 759 A1**
(43) Date of publication of application: **28.10.2026**
(21) Application number: 25801851.4
(22) Date of filing: 04.03.2025
(51) Int. Cl.: G05B 23/02, G07C 5/00

(54) **FAULT PROCESSING METHOD, DEVICE, STORAGE MEDIUM, AND PROGRAM PRODUCT**

(71) Applicant: SZ Zhuoyu Technology Co., Ltd., Shenzhen, Guangdong 518055 (CN)
(72) Inventor: MA, Lu, Shenzhen, Guangdong 518055 (CN); LIN, Xiaoyang, Shenzhen, Guangdong 518055 (CN)
(74) Representative: Bandpay & Greuter
(86) International application number: PCT/CN2025/080571
(87) International publication number: WO 2026/183714

(57) **Abstract**

Embodiments of the present application provide a method for processing malfunction, a device, a storage medium and a program product. The method includes: acquiring malfunction information of a vehicle malfunction, and generating a malfunction identifier corresponding to the vehicle malfunction; sending a malfunction processing request to a server, where the malfunction processing request includes the malfunction identifier and the malfunction information, and the malfunction processing request is used to request a processing on the vehicle malfunction; receiving, according to the malfunction identifier, a processing progress corresponding to the vehicle malfunction sent by the server; and displaying the processing progress. The method is used to achieve the data loop of the feedback of malfunction and improve the effectiveness of the updating of system version.

## Description

### TECHNICAL FIELD

The present application relates to the technical field of vehicles and, in particular, to a method for processing malfunction, a device, a storage medium and a program product.

### BACKGROUND

In the field of automatic driving, a vehicle may be driven automatically through an automatic driving system. During automatic driving, driving malfunctions of the vehicle will occur, and a user can provide feedback on the driving malfunctions.

In related arts, a user can provide feedback of problem text corresponding to the driving malfunctions through an interaction interface on the vehicle. Based on the problem text in the feedback, the vehicle can receive a target program version corresponding to the automatic driving system, and update the automatic driving system by the target program version to solve the driving malfunctions of the vehicle. However, the user cannot track the progress of processing the feedback problem after providing the feedback of problem, and even if the version of the automatic driving system is updated, the user is not sure whether the driving malfunction in the feedback is updated, and the data loop of the feedback of malfunction cannot be achieved, resulting in the low effectiveness of the updating of system version.

### SUMMARY

A method for processing malfunction, a device, a storage medium and a program product provided in embodiments of the present application are used to achieve the increase in effectiveness of updating a vehicle system version.

In a first aspect, an embodiment of the present application provides a method for processing malfunction, applied to a vehicle, including:
acquiring malfunction information of a vehicle malfunction, and generating a malfunction identifier corresponding to the vehicle malfunction;
sending a malfunction processing request to a server, where the malfunction processing request includes the malfunction identifier and the malfunction information, and the malfunction processing request is used to request a processing on the vehicle malfunction;
receiving, according to the malfunction identifier, a processing progress corresponding to the vehicle malfunction sent by the server; and
displaying the processing progress.

In a possible embodiment, the acquiring the malfunction information of the vehicle malfunction includes:
receiving an input instruction, where the input instruction is a speech input instruction and/or a detecting input instruction; and
acquiring the malfunction information according to the input instruction.

In a possible embodiment, the input instruction is the detecting input instruction; where the acquiring the malfunction information according to the input instruction includes:
performing, according to the detecting input instruction, a monitoring operation on a driving process of the vehicle, to obtain driving environment data and vehicle control data; and
obtaining, based on the driving environment data and the vehicle control data, the malfunction information.

In a possible embodiment, the detecting input instruction includes a detecting-started instruction and a detecting-finished instruction; where the performing, according to the detecting input instruction, the monitoring operation on the driving process of the vehicle, to obtain the driving environment data and the vehicle control data includes:
performing, based on the detecting-started instruction, the monitoring operation on the driving process of the vehicle; and
finishing, based on the detecting-finished instruction, the monitoring operation on the driving process of the vehicle, to obtain the driving environment data and the vehicle control data within a first monitoring duration.

In a possible embodiment, the input instruction is the speech input instruction; where the acquiring the malfunction information according to the input instruction includes:
receiving, according to the speech input instruction, speech information, where the speech information is used to describe the automatic driving malfunction; and
performing a speech analysis processing on the speech information, to obtain the malfunction information, where the malfunction information is malfunction description text.

In a possible embodiment, the receiving, according to the malfunction identifier, the processing progress corresponding to the vehicle malfunction sent by the server includes:
receiving, based on the malfunction information being a performance malfunction, the processing progress corresponding to the malfunction identifier, where the processing progress includes a feedback label and a progress status corresponding to the feedback label, and the feedback label is used to indicate a malfunction processing task corresponding to the malfunction information.

In a possible embodiment, further including:
receiving, based on the malfunction information being a non-performance malfunction, operation information corresponding to the malfunction identifier, where the operation information includes a malfunction description of the vehicle malfunction and an operation indication corresponding to the vehicle malfunction.

In a possible embodiment, further including:
receiving an upgrade program corresponding to the malfunction information, where the upgrade program is a program obtained after a malfunction processing is performed on at least one feedback malfunction within a preset duration, and the at least one feedback malfunction includes the vehicle malfunction; and
performing an update processing on a system program of the vehicle through the upgrade program.

In a second aspect, an embodiment of the present application provides a method for processing malfunction, applied to a server, including:
receiving a malfunction processing request of a vehicle, where the malfunction processing request is used to request to process a vehicle malfunction of the vehicle;
determining, according to the malfunction processing request, a processing progress corresponding to the vehicle malfunction; and
sending the processing progress to the vehicle.

In a possible embodiment, the malfunction processing request includes a malfunction identifier and malfunction information; where the determining, according to the malfunction processing request, the processing progress corresponding to the vehicle malfunction includes:
sending, based on the malfunction information being a performance malfunction, the processing progress corresponding to the malfunction identifier to the vehicle; or,
sending, based on the malfunction information being a non-performance malfunction, operation information corresponding to the malfunction identifier to the vehicle.

In a possible embodiment, the sending, based on the malfunction information being the performance malfunction, the processing progress corresponding to the malfunction identifier to the vehicle includes:
performing, based on the malfunction information being the performance malfunction, according to the malfunction identifier, monitoring on a processing device processing the malfunction information; and
acquiring, in the processing device, the processing progress corresponding to the malfunction identifier, and sending the processing progress to the vehicle.

In a possible embodiment, further including:
sending an upgrade program corresponding to the malfunction information, where the upgrade program is used to perform an update processing on a system program of the vehicle.

In a possible embodiment, the sending the upgrade program corresponding to malfunction information to the vehicle includes:
performing, according to the malfunction identifier, a monitoring processing on the processing device;
acquiring, in the processing device, the upgrade program corresponding to the malfunction information; and
sending the upgrade program to the vehicle.

In a third aspect, an apparatus for processing malfunction provided by an embodiment of the present application is applied to a vehicle, and the apparatus for processing malfunction includes an acquisition module, a first transmitting module, a first receiving module and a display module;
the acquisition module is specifically configured to: acquire malfunction information of a vehicle malfunction, and generate a malfunction identifier corresponding to the vehicle malfunction;
the first transmitting module is specifically configured to: send a malfunction processing request to a server, where the malfunction processing request includes the malfunction identifier and the malfunction information, the malfunction processing request is used to request a processing on the vehicle malfunction;
the first receiving module is specifically configured to: receive, according to the malfunction identifier, a processing progress corresponding to the vehicle malfunction sent by the server; and
the display module is specifically configured to: display the processing progress.

In some possible embodiments, the acquisition module is specifically configured to:
receive an input instruction, where the input instruction is a speech input instruction and/or a detecting input instruction; and
acquire the malfunction information according to the input instruction.

In some possible embodiments, the input instruction is the detecting input instruction; the acquisition module is specifically configured to:
perform, according to the detecting input instruction, a monitoring operation on a driving process of the vehicle, to obtain driving environment data and vehicle control data; and
obtain, based on the driving environment data and the vehicle control data, the malfunction information.

In some possible embodiments, the detecting input instruction includes a detecting-started instruction and a detecting-finished instruction; the acquisition module is specifically configured to:
perform, based on the detecting-started instruction, the monitoring operation on the driving process of the vehicle; and
finish, based on the detecting-finished instruction, the monitoring operation on the driving process of the vehicle, to obtain the driving environment data and the vehicle control data within a first monitoring duration.

In some possible embodiments, the input instruction is the speech input instruction; the acquisition module is specifically configured to:
receive, according to the speech input instruction, speech information, where the speech information is used to describe the automatic driving malfunction; and
perform a speech analysis processing on the speech information, to obtain the malfunction information, where the malfunction information is malfunction description text.

In some possible embodiments, the first receiving module is specifically configured to:
receive, based on the malfunction information being a performance malfunction, the processing progress corresponding to the malfunction identifier, where the processing progress includes a feedback label and a progress status corresponding to the feedback label, and the feedback label is used to indicate a malfunction processing task corresponding to the malfunction information.

In some possible embodiments, the apparatus is further configured to:
receive, based on the malfunction information being a non-performance malfunction, operation information corresponding to the malfunction identifier, where the operation information includes a malfunction description of the vehicle malfunction and an operation indication corresponding to the vehicle malfunction.

In some possible embodiments, the apparatus is further configured to:
receive an upgrade program corresponding to the malfunction information, where the upgrade program is a program obtained after a malfunction processing is performed on at least one feedback malfunction within a preset duration, and the at least one feedback malfunction includes the vehicle malfunction; and
perform an update processing on a system program of the vehicle through the upgrade program.

The apparatus for processing malfunction provided by the embodiment of the present application can execute the technical solution shown in the above method embodiments. The implementation principle and beneficial effects thereof are similar, and will not be repeated here.

In a fourth aspect, an apparatus for processing malfunction provided by an embodiment of the present application is applied to a server, and includes a second receiving module, a determining module and a second transmitting module;
the second receiving module is configured to: receive a malfunction processing request of a vehicle, where the malfunction processing request is used to request to process a vehicle malfunction of the vehicle;
the determining module is configured to: determine, according to the malfunction processing request, a processing progress corresponding to the vehicle malfunction; and
the second transmitting module is configured to: send the processing progress to the vehicle.

In some possible embodiments, the malfunction processing request includes a malfunction identifier and malfunction information; where the determining module is specifically configured to:
send, based on the malfunction information being a performance malfunction, the processing progress corresponding to the malfunction identifier to the vehicle; or,
send, based on the malfunction information being a non-performance malfunction, operation information corresponding to the malfunction identifier to the vehicle.

In a possible embodiment, the apparatus is further configured to:
perform, based on the malfunction information being the performance malfunction, according to the malfunction identifier, monitoring on a processing device processing the malfunction information; and
acquire, in the processing device, the processing progress corresponding to the malfunction identifier, and send the processing progress to the vehicle.

In some possible embodiments, the apparatus is further configured to:
send an upgrade program corresponding to the malfunction information, where the upgrade program is used to perform an update processing on a system program of the vehicle.

In a possible embodiment, the apparatus is further configured to:
perform, according to the malfunction identifier, a monitoring processing on the processing device;
acquire, in the processing device, the upgrade program corresponding to the malfunction information; and
send the upgrade program to the vehicle.

In a fifth aspect, an embodiment of the present application provides an electronic device, including: a memory and a processor;
the memory stores computer executable instructions;
the processor executes the computer executable instructions stored in the memory, to enable the processor to perform the first aspect and/or various possible implementations of the first aspect, or, the second aspect and/or various possible implementations of the second aspect.

In a possible embodiment, the electronic device is a vehicle or a server.

In a sixth aspect, an embodiment of the present application provides a movable platform, where the movable platform includes a processor and a memory,
the memory is configured to store a computer program;
the processor is configured to execute the computer program, to enable the processor to implement the first aspect and/or various possible implementations of the first aspect, or, the second aspect and/or various possible implementations of the second aspect.

In a seventh aspect, an embodiment of the present application provides a computer readable storage medium, where the computer readable storage medium stores computer executable instructions, when being executed by the processor, the computer executable instructions are used to implement the first aspect and/or various possible implementations of the first aspect, or, the second aspect and/or various possible implementations of the second aspect.

In an eighth aspect, an embodiment of the present application provides a computer product, including a computer program, when being executed by the processor, the computer program is used to implement the first aspect and/or various possible implementations of the first aspect, or, the second aspect and/or various possible implementations of the second aspect.

According to the method for processing malfunction, the device, the storage medium and the program product provided by the embodiments of the present application, the malfunction identifier corresponding to the malfunction information can be generated; the processing progress corresponding to the vehicle malfunction is received through the malfunction identifier; and the processing progress is displayed on the interaction interface, then a user can view the processing progress in real-time, thereby achieving the data loop of the feedback of malfunction, increasing the effectiveness of the updating of system version, and meanwhile improving the user experience.

### BRIEF DESCRIPTION OF DRAWINGS

The accompanying drawings are incorporated into the specification and form a part of the specification, illustrating embodiments in accordance with the present application and being used together with the specification to explain the principles of the present application.
FIG. 1 is a schematic diagram of an application scenario provided by an embodiment of the present application.
FIG. 2 is a schematic flow chart of a method for processing malfunction provided by an embodiment of the present application.
FIG. 3 is a schematic diagram of a processing progress provided by an embodiment of the present application.
FIG. 4 is a schematic flow chart of a method for processing malfunction provided by an embodiment of the present application.
FIG. 5 is a schematic interaction diagram of a method for processing malfunction provided by an embodiment of the present application.
FIG. 6 is a schematic system diagram of a method for processing malfunction provided by an embodiment of the present application.
FIG. 7 is a schematic structure diagram of an apparatus for processing malfunction provided by an embodiment of the present application.
FIG. 8 is a schematic structure diagram of an apparatus for processing malfunction provided by an embodiment of the present application.
FIG. 9 is a schematic structure diagram of an electronic device provided by an embodiment of the present application.

Through the above drawings, specific embodiments of the present application have been shown, and more detailed descriptions will be provided in the following text. These drawings and textual descriptions are not intended to limit the scope of the present application in any way, but rather to illustrate the concept of the present application for those skilled in the art by referring to the specific embodiments.

### DESCRIPTION OF EMBODIMENTS

Here, exemplary embodiments will be described in detail, with examples shown in the accompanying drawings. When referring to the accompanying drawings, unless otherwise indicated, the same numbers in different drawings represent the same or similar elements. The implementations described in the following exemplary embodiments do not represent all implementations consistent with the present application. On the contrary, they are only examples of devices and methods consistent with some aspects of the present application as described in the accompanying claims.

In the field of automatic driving, the automatic driving system can be continuously collected, analyzed, fed back and optimized through the data loop (Data Loop), so that the automatic driving system can continuously learn, improve and adapt to different driving environments.

The data loop may include following steps.

Step 1, data collection: a vehicle can collect a large amount of environmental data through various sensors (such as cameras, radar, laser radar, etc.). The environmental data may include traffic conditions, road information, weather conditions, etc. around the vehicle.

Step 2, data processing and analysis: the automatic driving system can analyze and process the environmental data, the automatic driving system provides decision support based on the environmental data, such as identifying obstacles, planning routes, determining traffic signals, etc.

Step 3, model training and optimization: using the data obtained from analysis, a machine learning model is trained and optimized. Through the learning of a large amount of data, the algorithm of the automatic driving system will be continuously improved to improve its prediction accuracy and decision-making ability.

Step 4, feedback and adjustment: the actual driving conditions of the vehicle (such as safety, efficiency, ability to handle with complex scenarios, etc.) will be fed back to the automatic driving system, so as to adjust the control strategy and decision-making logic of the automatic driving system, forming an improved and optimized closed loop.

Step 5, continued iteration: the whole process is continuous. With the accumulation of more data and the emergence of new driving scenarios, the performance of the automatic driving system will be continuously improved to achieve higher safety and adaptability.

In related arts, at the stage of feedback and adjustment, a user can provide feedback of problem text corresponding to the driving malfunctions through an interaction interface on the vehicle. At the stage of continued iteration, based on the problem text in the feedback, the automatic driving system can be retrained, to obtain the target program version corresponding to the automatic driving system. The automatic driving system can be updated by the target program version to solve the driving malfunctions of the vehicle.

However, the user cannot track the progress of processing the feedback problem after providing the feedback of problem, and even if the version of the automatic driving system is updated, the user is not sure whether the driving malfunction in the feedback is updated, and the data loop of the feedback of malfunction cannot be achieved, resulting in the low effectiveness of the updating of system version.

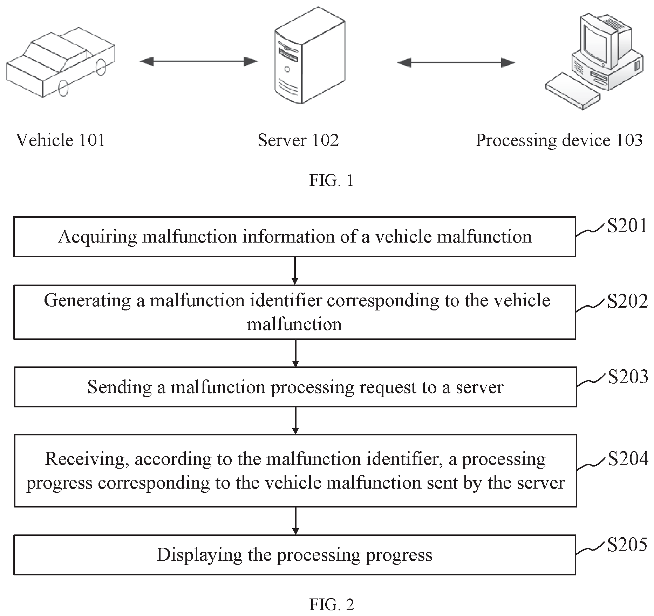

FIG. 1 is a schematic diagram of an application scenario provided by an embodiment of the present application. Please refer to FIG. 1, it may include a vehicle 101, a server 102 and a processing device 103.

The vehicle 101 can be mounted with an automatic driving system. The automatic driving system can be configured to assist the vehicle 101 in automatic driving, automatic parking, etc. When a user uses the automatic driving system, there may be driving malfunctions. For example, during the automatic driving of the vehicle 101, a parking area on both sides of the road is recognized as a lane, which causes the user to enter the parking area by mistake when changing lanes for driving.

The user may be a driver, a tester, an algorithm researchers, etc.

The vehicle 101 is provided with an interaction interface, the user can provide a feedback of a vehicle malfunction existed in the vehicle through the interaction interface. The vehicle 101 can acquire the malfunction information of the vehicle malfunction, and generate a malfunction identifier corresponding to the vehicle malfunction. The vehicle 101 can send a malfunction processing request to the server 102, where the malfunction processing request includes the malfunction identifier and the malfunction information, the malfunction processing request is used to request a processing on the vehicle malfunction.

The server 102 can send the malfunction information to the processing device 103 according to the malfunction processing request. The processing device 103 can perform a plurality of malfunction processing tasks, the server 102 can monitor the malfunction processing tasks, determine the processing progress corresponding to the vehicle malfunction, and send the processing progress to the vehicle 101.

The vehicle 101 can receive, according to the malfunction identifier, the processing progress corresponding to the vehicle malfunction, and display the processing progress on the interaction interface.

According to the method for processing malfunction provided by the embodiments of the present application, the malfunction identifier can be generated after providing the feedback of the malfunction information corresponding to the vehicle malfunction; the processing progress corresponding to the vehicle malfunction can be received in time through the malfunction identifier; and the processing progress is displayed on the interaction interface, thereby achieving the data loop of the feedback of malfunction, increasing the effectiveness of the updating of system version, and meanwhile improving the user experience.

A detailed explanation of the technical solution of the present application and how the technical solution of the present application solves the above technical problems through specific implementation examples will be made in the below. The following specific embodiments can be combined with each other, and the same or similar concepts or processes may not be repeated in some embodiments. In the below, the embodiments of the present application will be described in conjunction with the accompanying drawings.

FIG. 2 is a schematic flow chart of a method for processing malfunction provided by an embodiment of the present application. Please refer to FIG. 2, the method may include the following steps.

S201, acquiring malfunction information of a vehicle malfunction.

The executed subject of the embodiment of the present application maybe a vehicle (such as a domain controller on the vehicle), or an apparatus for processing malfunction provided in the vehicle. The apparatus for processing malfunction can be implemented through software or a combination of software and hardware.

During the automatic driving of the vehicle, if there exists the vehicle malfunction, the user can click a malfunction reporting button, to trigger an input instruction.

The malfunction reporting button may be a mechanical button or a touch button on the interactive interface. For example, the mechanical button can be arranged on a steering wheel for easy clicking by the driver.

Specifically, the input instruction can be received, where the input instruction is a speech input instruction and/or a detecting input instruction; the malfunction information is acquired according to the input instruction.

The speech input instruction can be used to turn on the microphone on the vehicle and record the user's voice description of the vehicle malfunction.

The detecting input instruction can be used to perform a monitoring operation on a driving process of the vehicle, to obtain the vehicle's driving environment data and vehicle control data.

In the below, the execution process of the acquiring the malfunction information according to the input instruction will be explained through the following three manners.

First manner, the input instruction is the detecting input instruction.

The malfunction information includes the driving environment data and the vehicle control data. The driving environment data may include data about the environment in which the vehicle is located, such as image data, distances to respective obstacles, and environment temperature, etc., which can be acquired by a device, such as a sensor, etc., installed on the vehicle. The vehicle control data may include multiple control instructions for the vehicle's autonomous driving, the control instructions can be acceleration control instructions, angular velocity control instructions, etc., which can be acquired through a control device of the vehicle.

Specifically, the monitoring operation can be performed on the driving process of the vehicle according to the detecting input instruction, to obtain the driving environment data and the vehicle control data. The malfunction information is obtained based on the driving environment data and the vehicle control data.

After the user clicks the malfunction reporting button, the vehicle can receive a detecting-started instruction, and perform the monitoring operation on the driving process of the vehicle, to obtain the driving environment data and the vehicle control data.

The detecting input instruction may include a detecting-started instruction and a detecting-finished instruction.

In some possible embodiments, after the user clicks the malfunction reporting button, the vehicle can receive a detecting-started instruction, and starts to monitor the driving process of the vehicle; when a preset time duration is reached, the vehicle can receive the detecting-finished instruction, and stop monitoring the driving process of the vehicle.

In some possible embodiments, after the user clicks the malfunction reporting button, the vehicle can receive a detecting-started instruction, and starts to monitor the driving process of the vehicle; after the user clicks the malfunction reporting button again, the vehicle can receive the detecting-finished instruction, and stop monitoring the driving process of the vehicle.

The driving environment data and the vehicle control data within a first monitoring duration between the detecting-started instruction and the d detecting-finished instruction may be acquired.

Specifically, the monitoring operation on the driving process of the vehicle is performed based on the detecting-started instruction; the monitoring operation on the driving process of the vehicle is finished based on the detecting-finished instruction, to obtain the driving environment data and the vehicle control data within the first monitoring duration.

The vehicle may include a sensor, an automatic driving controller, and an inertial measurement unit (IMU).

The sensor is configured to acquire the driving environment data of the vehicle, the IMU is configured to measure an acceleration velocity, an angular velocity, and a pose of the vehicle, and other parameters.

During the automatic driving, the vehicle can acquire the driving environment data through the sensor. The automatic driving controller can acquire the driving environment data, as well as the acceleration velocity, the angular velocity, and the pose of the vehicle. Based on the driving environment data, the acceleration velocity, the angular velocity, and the pose, the control data can be generated, to control the driving of the vehicle.

The sensor may include an image sensor, a radar sensor, a temperature sensor, etc. The image sensor can capture images of the driving environment of the vehicle, the radar sensor can acquire a distance between the vehicle and surrounding obstacles, and the temperature sensor can acquire the temperature of the driving environment of the vehicle.

In the present application, the driving environment data and the vehicle control data within the first monitoring duration can be acquired by the detecting input instruction, so as to perform analysis and processing on the vehicle malfunction.

Second manner, the input instruction is the speech input instruction.

The malfunction information includes malfunction description text.

Specifically, speech information can be received according to the speech input instruction, where the speech information is used to describe the automatic driving malfunction. A speech analysis processing is performed on the speech information, to obtain the malfunction information, where the malfunction information is malfunction description text.

After the speech input instruction is received, the user can input the speech information through a microphone, and the vehicle can directly convert the speech information into the malfunction information in a text form based on a deep learning language model (such as RNN, Transformer).

In some embodiments, when the user describes the vehicle malfunction, due to the possibility of unrelated emotions, pauses, word order confusion, etc., keyword extraction can be performed on the text when converting voice information into the text, to obtain the malfunction description text.

Keywords can be extracted from the text through sentence segmentation, frequency filtering, and other methods. For example, sentence segmentation can be implemented by detecting pauses markers and subject/conjunctions, and low-frequency/high-frequency vocabulary is removed.

Third manner, the input instruction includes the detecting input instruction and the speech input instruction.

The malfunction information includes the driving environment data, the vehicle control data and the malfunction description text.

Specifically, when acquiring the detecting input instruction, the user's description of the current situation of automatic driving of the vehicle can also be received by the microphone.

After the user clicks the malfunction reporting button, the monitoring of the vehicle driving and the input of speech can be simultaneously enabled, to obtain the driving environment data, the vehicle control data and the malfunction description text.

In some possible embodiments, the malfunction description text can be acquired after the driving environment data and the vehicle control data are acquired. The malfunction information is obtained according to the driving environment data, the vehicle control data and the malfunction description text.

It is worth noting that the malfunction description text may also be text information directly input by the user.

The interactive interface may include a text input interface, where users can describe the vehicle malfunction by editing text.

On the text input interface, multiple preset key entries may be included, and the user can input corresponding key information in a box corresponding to each preset keyword entry.

Key information corresponding to each preset keyword entry can be acquired, and the malfunction information is determined according to the key information corresponding to each preset keyword entry.

The preset keyword entries may be an obstacle object, an obstacle scenario, etc.

S202, generating a malfunction identifier corresponding to the vehicle malfunction.

The malfunction identifier may include, but is not limited to, at least one of a vehicle identifier of the vehicle with malfunction, the malfunction time, an malfunction event, etc.

For example, assuming the vehicle identifier of the vehicle with malfunction is A1, the malfunction time is 2024-01-21, and the malfunction event is 001, then it can be determined that the malfunction identifier may be A120240121001.

S203, sending a malfunction processing request to a server.

The malfunction processing request may include the malfunction identifier and the malfunction information, and the malfunction processing request is used to request a processing on the vehicle malfunction.

S204, receiving, according to the malfunction identifier, a processing progress corresponding to the vehicle malfunction sent by the server.

The malfunction information may be a performance malfunction or a non-performance malfunction.

The performance malfunction is used to indicate a malfunction directly related to a function of the automatic driving system, which refers to a malfunction caused by physical damage or failure of hardware, software or mechanical system. For example, processor random errors, module output anomalies, or redundant system failures, etc.

The non-performance malfunction is used to indicate a problem caused by design limitations of the automatic driving system or the external environment. The automatic driving system itself has no physical malfunctions, but its functions deviate from expectations due to algorithm limitations, environmental interference or human misuse. For example, perceptual limitations, adverse weather effects, etc.

In some possible embodiments, the processing progress corresponding to the malfunction identifier is received based on the malfunction information being a performance malfunction, where the processing progress includes a feedback label and a progress status corresponding to the feedback label.

In some possible embodiments, the staff of the technical department can perform updating and training on a system program corresponding to the automatic driving system according to the malfunction information, to obtain an upgrade program corresponding to the malfunction information.

In some possible embodiments, after acquiring the malfunction information, the processing device can perform updating and training on the system program corresponding to the automatic driving system according to the malfunction information, to obtain an upgrade program corresponding to the malfunction information.

The process of updating and training may include a plurality of malfunction processing tasks. The processing device can process each malfunction processing task in sequence. Upon reaching each malfunction processing task, the server can acquire the current malfunction processing task, and the server can provide a corresponding feedback label to the vehicle. The feedback label can be used to indicate a malfunction processing task corresponding to the malfunction information currently. Due to the plurality of malfunction processing tasks include quality inspection of malfunction information, data aggregation, quality inspection of annotation, floating-point model construction, fixed-point model construction, algorithm package integration, a platform test, a platform qualification test, an object qualification test, and upgrading a program; the feedback label can include the quality inspection of malfunction information, the data aggregation, the quality inspection of annotation, the floating-point model construction, the fixed-point model construction, the algorithm package integration, the platform test, the platform qualification test, the object qualification test, and the upgrading a program.

When the malfunction information enters a malfunction processing task corresponding to a certain feedback label, the task processing in this stage may be smoothly passed at this malfunction processing task, or the task processing may be performed again after the malfunction processing task fails to pass the task processing. Therefore, when receiving the feedback label, a progress status corresponding to the feedback label can also be received.

The progress status is used to indicate the processing condition of the malfunction processing task corresponding to the feedback label. Generally, the progress status may include: passed, failed, or completed. In some embodiments, a progress status corresponding to each feedback label may be different.

Operation information corresponding to the malfunction identifier is received based on the malfunction information being a non-performance malfunction, where the operation information includes a malfunction description of the vehicle malfunction and an operation indication corresponding to the vehicle malfunction.

The user can set the vehicle through the malfunction description and the operation indication, to solve the vehicle malfunction.

For example, the vehicle malfunction is that a parking area on both sides of the road is recognized as a lane, which causes the user to enter the parking area by mistake when changing lanes for driving. In fact, the automatic driving system has solved this problem, only a certain function needs to be enabled, the function can realize the loading of surrounding parking areas. The malfunction description may be "The vehicle malfunction in the feedback can be resolved through a certain function. Please use the following operation indication to troubleshoot. If the vehicle malfunction cannot be resolved, please report it again. Thank you". The operation indication may be "Please enable/replace a certain function in the settings".

For example, if the vehicle malfunction is that a distance between the vehicle and an obstacle cannot be correctly determined during the automatic driving; the malfunction description may be "The vehicle malfunction in the feedback is caused by poor contact of a certain sensor. Please use the following operation indication to troubleshoot. If the vehicle malfunction cannot be resolved, please report it again. Thank you". The operation indication may be "Please replace or reinstall a certain sensor".

S205, displaying the processing progress.

The vehicle may include the interactive interface, and the processing progress can be displayed on the interactive interface.

Each feedback label may correspond to multiple preset statuses, and the progress status in the processing progress may be one of the multiple preset statuses. The number of the preset statuses corresponding to each feedback label may be determined according to the actual situation. For example, the more processing procedures corresponding to the feedback label, the relatively larger the number of the preset statuses may be.

For example, the multiple preset statuses corresponding to the quality inspection of malfunction information may include storing in progress, illegal status, quality inspection in progress, quality inspection failure, upload success, upload failure, etc. The multiple preset statuses corresponding to the data aggregation may be: passed or failed corresponding to the quality inspection of annotation.

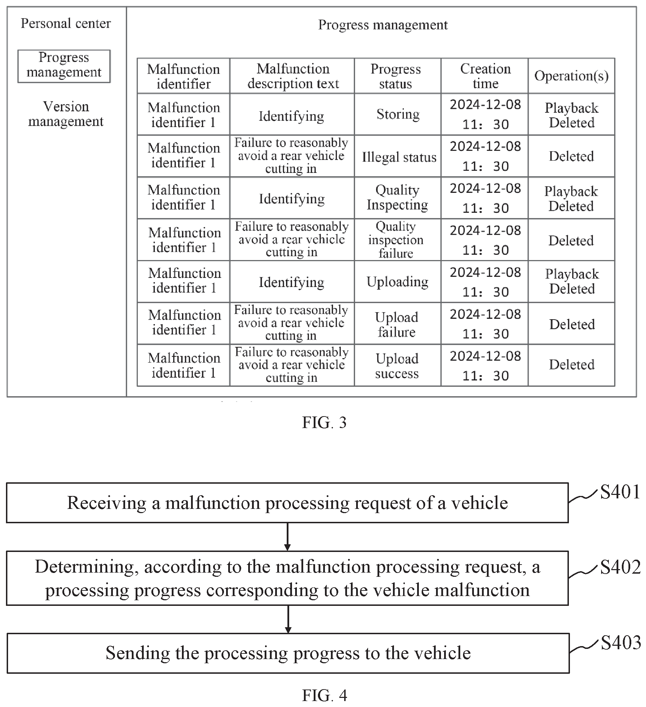

For ease of understanding, with reference to FIG. 3, taking the quality inspection of malfunction information as an example, the display situation of the processing progress provided by an embodiment of the present application will be explained in the below.

FIG. 3 is a schematic diagram of a processing progress provided by an embodiment of the present application. Please refer to FIG. 3, in an automatic driving system installed in a vehicle, a user can log in to a corresponding account thereof. In a personal center, progress management, version management, etc. can be included. After clicking the progress management, at least one processing progress may be displayed. Each processing progress may include a malfunction identifier, a malfunction description text, a progress status, a creation time, an operation, etc.

Please refer to FIG. 3, multiple processing progresses corresponding to a malfunction identifier 1 are included, the multiple processing progresses provides feedback to the same vehicle malfunction, and all feedback times are 11:30 on December 8, 2024.

A first processing progress corresponds to a malfunction description text *Identifying*, and a progress status *Storing*. Meanwhile, malfunction information of the vehicle is being acquired. If the system encounters an unknown status, a progress status corresponding to a second processing progress is the illegal status. In addition, the identified malfunction description text at this time may be *Failure to reasonably avoid a rear vehicle cutting in*. The malfunction information of the vehicle malfunction corresponding to the malfunction identifier 1 can be re-uploaded. A third processing progress is used to indicate to perform quality inspection on the malfunction information after the uploading and storage are succeeded. A fourth processing progress is used to indicate a quality inspection failure of the malfunction information, the quality inspection failure may be, for example, there is a lack of data in the malfunction information. A fifth processing progress is used to indicate that, after the malfunction information is stored and the quality inspection on the malfunction information is succeeded, the malfunction information is being uploaded. A sixth processing progress is used to indicate an indication of the upload failure of the malfunction information. A seventh processing progress is used to indicate an indication of the upload success of the malfunction information.

According to the method for processing malfunction provided by the embodiments of the present application, the malfunction identifier can be generated after providing the feedback of the malfunction information corresponding to the vehicle malfunction; the processing progress corresponding to the vehicle malfunction can be received in time through the malfunction identifier; and the processing progress is displayed on the interaction interface, thereby achieving the data loop of the feedback of malfunction, increasing the effectiveness of the updating of system version, and meanwhile improving the user experience.

In the embodiment of the present application, an upgrade program corresponding to the malfunction information can be received, and an update processing is performed on a system program of the vehicle through the upgrade program.

The upgrade program may be a program obtained after a malfunction processing is performed on at least one feedback malfunction within a preset duration, and the at least one feedback malfunction includes the vehicle malfunction.

Within the preset duration, the processing device can receive the at least one feedback malfunction. The processing device can retrain the system program according to the at least one feedback malfunction received within the preset duration, to obtain the upgrade program.

Through the upgrade program, an upgrading processing can be performed on the vehicle malfunction in the system program of the vehicle. The upgrade program is an upgrade program corresponding to the vehicle. If malfunction information in the feedback from each vehicle differs, an upgrade program also varies. Personalized upgrade of a system program for each vehicle can be achieved, customized services can be provided for each user, to improve the user experience.

FIG. 4 is a schematic flow chart of a method for processing malfunction provided by an embodiment of the present application. Please refer to FIG. 4, the method include the following steps.

S401, receiving a malfunction processing request of a vehicle.

The executed subject of the embodiment of the present application is a server, or may be an apparatus for processing malfunction provided in the server. The apparatus for processing malfunction can be implemented through software or a combination of software and hardware.

The malfunction processing request can be used to request to process a vehicle malfunction of the vehicle.

In some possible embodiments, after receiving the malfunction processing request, the server can determine a plurality of malfunction processing tasks corresponding to the malfunction processing request, and assign the plurality of malfunction processing tasks to the processing device, and monitor each malfunction processing task. When a malfunction processing task corresponding to a feedback label is monitored by the server, a processing progress corresponding to the feedback label can be sent to the vehicle.

A plurality of processing devices may be assigned to process the plurality of malfunction processing tasks, achieving that each processing device processes a malfunction processing task corresponding the processing device, or that one processing device processes multiple malfunction processing tasks.

In some possible embodiments, the server can perform the plurality of malfunction processing tasks according to the malfunction information, and perform updating and training on a system program, to obtain an upgrade program corresponding to the malfunction information.

The plurality of malfunction processing tasks may include storage of malfunction information, quality inspection of malfunction information, data aggregation, floating-point model construction, fixed-point model construction, algorithm package integration, a platform qualification test, an object qualification test, and upgrading a program.

S402, determining, according to the malfunction processing request, a processing progress corresponding to the vehicle malfunction.

The server can perform the plurality of malfunction processing tasks in sequence according to the malfunction processing request. At each malfunction processing task, a processing progress corresponding to the malfunction processing task can be provided. The processing progress includes the feedback label and a progress status.

S403, sending the processing progress to the vehicle.

After each malfunction processing task is completed, the processing progress corresponding to the malfunction processing task can be sent to the vehicle.

In the method for processing malfunction provided by the embodiment of the present application, the processing progress corresponding to the vehicle malfunction can be determined according to the malfunction processing request, and the processing progress is sent to the vehicle, which can achieve the feedback of malfunction in real-time, and increase the effectiveness of the updating of system version.

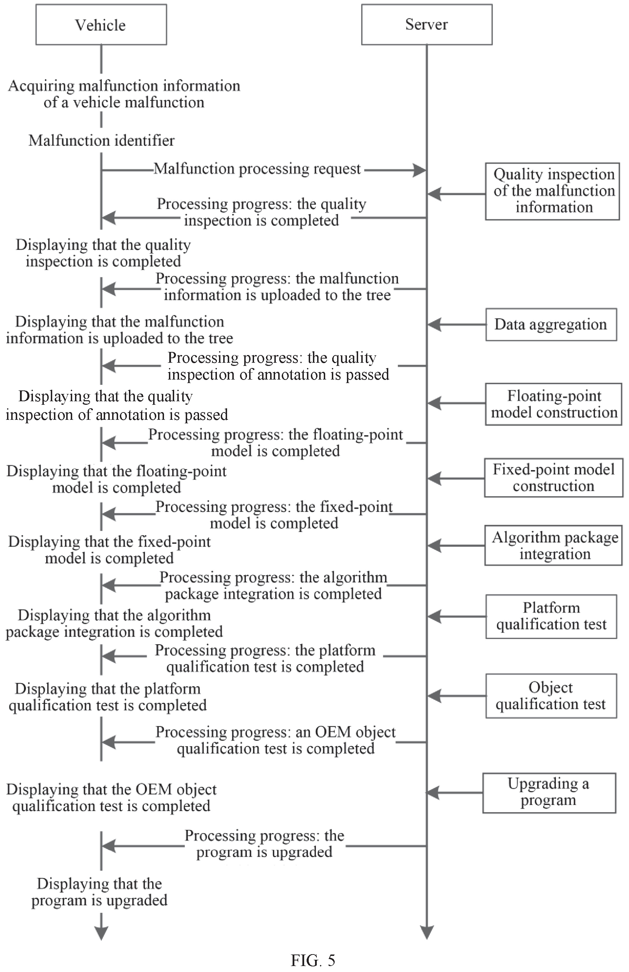

FIG. 5 is a schematic interaction diagram of a method for processing malfunction provided by an embodiment of the present application. Please refer to FIG. 5, a vehicle and a server are included. The vehicle can acquire malfunction information of a vehicle malfunction, and generate a malfunction identifier corresponding to the vehicle malfunction. The vehicle can send a malfunction processing request to the server. The malfunction processing request includes the malfunction identifier and the malfunction information.

After receiving the malfunction processing request, the server can determine, according to the malfunction processing request, a processing progress corresponding to the vehicle malfunction, and send the processing progress to the vehicle. Specifically, the server can perform a plurality of malfunction processing tasks according to the malfunction information. The plurality of malfunction processing tasks may include quality inspection of malfunction information, data aggregation, floating-point model construction, fixed-point model construction, algorithm package integration, a platform qualification test, an object qualification test, and upgrading a program.

During the quality inspection of malfunction information, it may include storing the malfunction information in a database, conducting preliminary quality inspection (referred to as preliminary quality inspection) on the malfunction information, conducting data partition on the malfunction information, determining whether the malfunction information is an experience related malfunction, etc. After the preliminary quality inspection on the malfunction information is passed, it can send the vehicle the processing progress being that the preliminary quality inspection is completed (or, if the preliminary quality inspection is failed, the processing progress being that the preliminary quality inspection is failed is sent). The preliminary quality inspection being completed is used to indicate that the feedback label is the preliminary quality inspection and the progress status is completed. After the data partition is conducted on the malfunction information, it sends the vehicle the processing progress being that the malfunction information is uploaded to the tree. If the malfunction information is the experience related malfunction, the data aggregation is conducted.

At the stage of the data aggregation, it may include data preprocessing and determining data of respective scenarios. The data preprocessing may include scheduling, initial annotation, quality inspection of annotation, and correction of annotation. A processing progress corresponding to the quality inspection of annotation can be sent to the vehicle, and the processing progress can be that the quality inspection of annotation is passed or the annotation of quality inspection is failed. The data of respective scenarios may include data of a domain scenario tree, data of a platform scenario tree, and data of a project scenario tree. The data of the domain scenario tree may be data of scenarios such as road types (straight roads, curves, intersections), traffic participants (vehicles, pedestrians, bicycles), weather conditions, etc. The data of the platform scenario tree may be data of scenarios such as vehicle driving, vehicle parking, and safety avoidance. The data of the project scenario tree may be data of scenarios for specific traffic scenarios (complex intersections, accident-prone road sections) or vehicle dynamic behavior (lane changing, emergency braking) and other scenario data.

Based on the malfunction information, a training set can be determined in respective scenario data. The training set includes multiple training data, each of which includes scenario data and control data corresponding to the scenario data. When selecting training data, it is necessary to choose more scenario data related to the malfunction information, as well as correctly processed control data under that scenario data. For example, the vehicle malfunction is failure to reasonably avoid a rear vehicle cutting in. The scenario data should include scenario data of a rear vehicle cutting in, the control data should include data of the vehicle performing reasonable avoidance.

A preset model can be trained by the training set to obtain a floating-point model. A processing progress corresponding to the floating-point model construction can be sent to the vehicle. The processing progress can be that the floating-point model is completed. In addition, a test report corresponding to the floating-point model can be sent to the vehicle, the test report can include test content and a test result.

After the floating-point model is obtained, it can be deployed as a fixed-point model. The deployed fixed-point model can be conducted with a test for multiple object tracking (Multiple Object Tracking, MOT), bird's-eye view (Bird's-Eye View, BEV), and perspective n-point problem model (Perspective-n-Point, PNP). A processing progress corresponding to the fixed-point model is sent to the vehicle, the processing progress is that the fixed-point model is completed. At the same time, a test report corresponding to the fixed-point model may also be sent to the vehicle.

After the test on the fixed-point model is passed, algorithm package integration is conducted. And a test in conducted respectively on a perception package (Perception Package), a simultaneous localization and mapping package (Simultaneous Localization and Mapping package, SLAM package) and a planning and control (Planning and Control, PnC) package in the algorithm package. A processing progress being that algorithm package integration is completed is sent to the vehicle, a corresponding test report may also be sent. After a test on algorithm package integration is passed, the package delivery can be completed, and a platform test can be conducted.

During the platform qualification test, an automated test management platform can be used to test product performance, platform version integration, and platform qualification separately. After the platform version integration, a processing progress that the platform packaging test is completed can be sent to the vehicle. After the platform qualification test is completed, the processing progress that the platform qualification test is completed is sent to the vehicle.

During the object qualification test, the qualification test can be conducted through an original equipment manufacturer (Original Equipment Manufacturer, OEM), a processing progress that the OEM object qualification test is completed is sent to the vehicle. Finally, a system program in the vehicle can be upgraded by the Over-The-Air Technology (Over-The-Air Technology, OTA), and after the program is upgraded for the vehicle, a processing progress that the program is upgraded is sent to the vehicle.

The vehicle can receive, according to the malfunction identifier, the processing progress corresponding to the vehicle malfunction, and display the progress status corresponding to the processing progress.

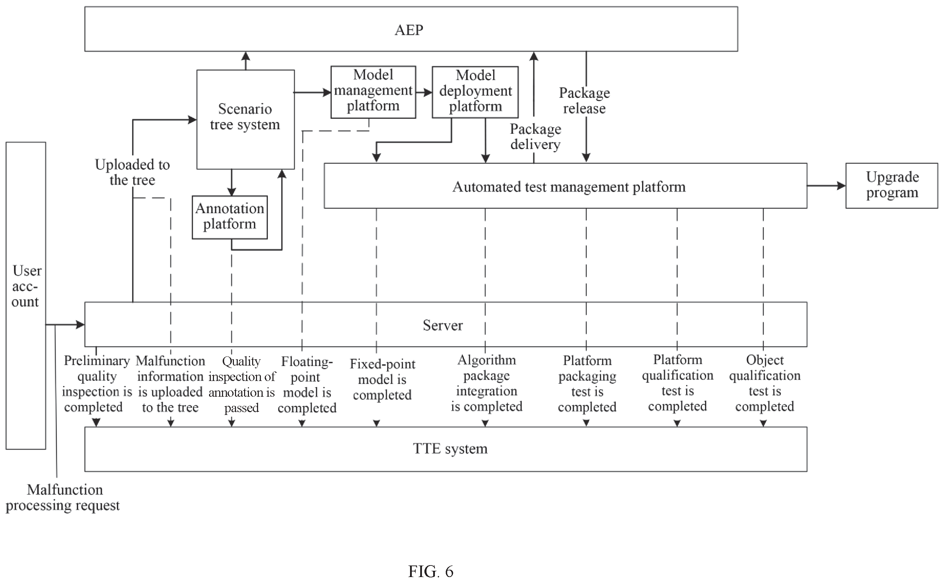

FIG. 6 is a schematic system diagram of a method for processing malfunction provided by an embodiment of the present application. Please refer to FIG. 6, a ticket to experience (Ticket to Experience, TTE) system may be installed on the vehicle, a user can log in the user account in the TTE system (for example, a program of the TTE system is installed on the controller of the vehicle, and the user account is logged in through the program). The user can send a malfunction processing request to a server through the user account.

The server can assign processing tasks to respective systems (processing devices) based on the malfunction processing request. The respective systems include a scenario tree system, an annotation platform, a model management platform, a model deployment platform, an automated test management platform, and an application enablement platform (Application Enablement Platform, AEP).

After the server performs the preliminary quality inspection on malfunction information in the malfunction processing request, a feedback that the preliminary quality inspection is completed can be provided. After the malfunction information that has been conducted with the preliminary quality inspection is uploaded to the tree in the scenario tree system, a feedback that the malfunction information is uploaded to the tree can be provided. Optionally, the malfunction information that has been conducted with the preliminary quality inspection can be conducted with data partition by a technician, to determine whether the malfunction information belongs to a functional malfunction or a non-functional malfunction, so that the functional malfunction is uploaded to the scenario tree system and the feedback of the non-functional malfunction and a corresponding operation is provided to the user. After determining required training data in the scenario tree system and conducting the quality inspection of annotation on the annotation platform, a feedback that the quality inspection of annotation is passed can be provided. After the training data that has passed the quality inspection is trained on the model management platform to obtain the floating-point model, a feedback that the floating-point model is completed can be provided. After the floating-point model is processed on the model deployment platform to determine the fixed-point model, a feedback that the fixed-point model is completed can be provided. The fixed-point model is conducted with a model evaluation through the automated test management platform (for example, the floating-point model is tested by using a preset evaluation metric and a preset test set). The fixed-point model that passes the test will be conducted with the algorithm package integration on the model deployment platform, and the integrated algorithm package will be evaluated on the automated test management platform (for example, the algorithm package is tested by using a preset test set). If the test passes, a feedback that the algorithm package integration is completed can be provided. After the algorithm package that has passed the test is delivered to the AEP, the AEP can release the package to the automated test management platform. Optionally, AEP can receive algorithm packages corresponding to multiple malfunction processing requests selected by a technician or processed within a preset period, and integrate them into a large package (a new version upgrade package) for package releasing. The automated test management platform can complete a platform packaging test, a platform qualification test and an object qualification test on the large package, and respectively provide feedbacks that the platform packaging test is completed, the platform qualification test is completed, and the object qualification test is completed. Finally, an upgrade program is obtained on the automated test management platform and output to the vehicle side for upgrading.

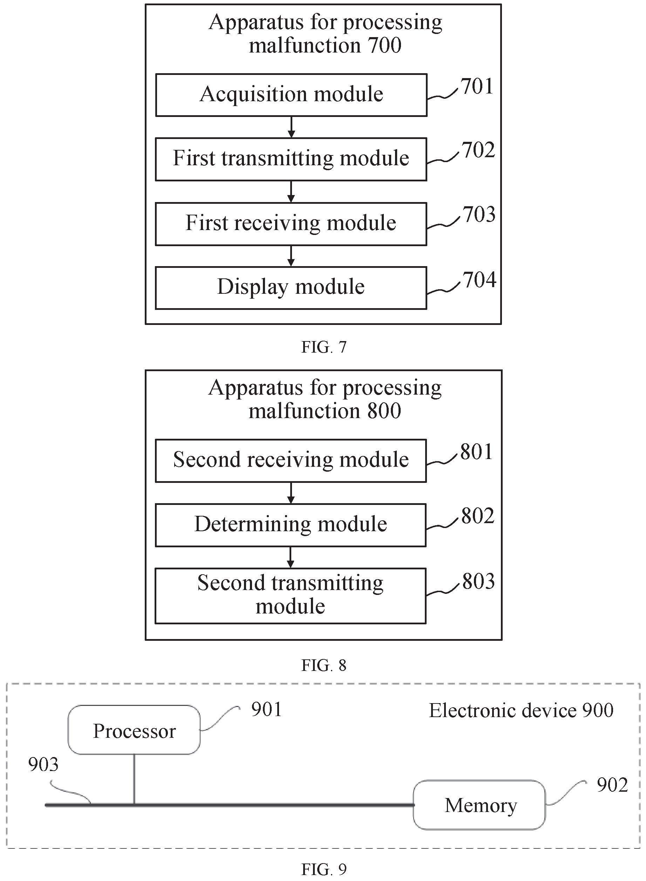

FIG. 7 is a schematic structure diagram of an apparatus for processing malfunction provided by an embodiment of the present application. Please refer to FIG. 7, the apparatus for processing malfunction 700 includes an acquisition module 701, a first transmitting module 702, a first receiving module 703 and a display module 704:
the acquisition module 701 is specifically configured to: acquire malfunction information of a vehicle malfunction, and generate a malfunction identifier corresponding to the vehicle malfunction;
the first transmitting module 702 is specifically configured to: send a malfunction processing request to a server, where the malfunction processing request includes the malfunction identifier and the malfunction information, and the malfunction processing request is used to request a processing on the vehicle malfunction;
the first receiving module 703 is specifically configured to: receive, according to the malfunction identifier, a processing progress corresponding to the vehicle malfunction sent by the server; and
the display module 704 is specifically configured to: display the processing progress.

In some possible embodiments, the acquisition module 701 is specifically configured to:
receive an input instruction, where the input instruction is a speech input instruction and/or a detecting input instruction; and
acquire the malfunction information according to the input instruction.

In some possible embodiments, the input instruction is the detecting input instruction; the acquisition module 601 is specifically configured to:
perform, according to the detecting input instruction, a monitoring operation on a driving process of the vehicle, to obtain driving environment data and vehicle control data; and
obtain, based on the driving environment data and the vehicle control data, the malfunction information.

In some possible embodiments, the detecting input instruction includes a detecting-started instruction and a detecting-finished instruction; the acquisition module 701 is specifically configured to:
perform, based on the detecting-started instruction, the monitoring operation on the driving process of the vehicle; and
finish, based on the detecting-finished instruction, the monitoring operation on the driving process of the vehicle, to obtain the driving environment data and the vehicle control data within a first monitoring duration.

In some possible embodiments, the input instruction is the speech input instruction; the acquisition module 601 is specifically configured to:
receive, according to the speech input instruction, speech information, where the speech information is used to describe the automatic driving malfunction; and
perform a speech analysis processing on the speech information, to obtain the malfunction information, where the malfunction information is malfunction description text.

In some possible embodiments, the first receiving module 703 is specifically configured to:
receive, based on the malfunction information being a performance malfunction, the processing progress corresponding to the malfunction identifier, where the processing progress includes a feedback label and a progress status corresponding to the feedback label, and the feedback label is used to indicate a malfunction processing task corresponding to the malfunction information.

In some possible embodiments, the apparatus is further configured to:
receive, based on the malfunction information being a non-performance malfunction, operation information corresponding to the malfunction identifier, where the operation information includes a malfunction description of the vehicle malfunction and an operation indication corresponding to the vehicle malfunction.

In some possible embodiments, the apparatus is further configured to:
receive an upgrade program corresponding to the malfunction information, where the upgrade program is a program obtained after a malfunction processing is performed on at least one feedback malfunction within a preset duration, and the at least one feedback malfunction includes the vehicle malfunction; and
perform an update processing on a system program of the vehicle through the upgrade program.

The apparatus for processing malfunction provided by the embodiment of the present application can execute the technical solution shown in the above method embodiments. The implementation principle and beneficial effects thereof are similar, and will not be repeated here.

FIG. 8 is a schematic structure diagram of an apparatus for processing malfunction provided by an embodiment of the present application. Please refer to FIG. 7, the apparatus for processing malfunction 800 includes a second receiving module 801, a determining module 802 and a second transmitting module 803:
the second receiving module 801 is configured to: receive a malfunction processing request of a vehicle, where the malfunction processing request is used to request to process a vehicle malfunction of the vehicle;
the determining module 802 is configured to: determine, according to the malfunction processing request, a processing progress corresponding to the vehicle malfunction; and
the second transmitting module 803 is configured to: send the processing progress to the vehicle.

In some possible embodiments, the malfunction processing request includes a malfunction identifier and malfunction information; and the determining module 802 is specifically configured to:
send, based on the malfunction information being a performance malfunction, the processing progress corresponding to the malfunction identifier to the vehicle; or,
send, based on the malfunction information being a non-performance malfunction, operation information corresponding to the malfunction identifier to the vehicle.

In a possible embodiment, the apparatus is further configured to:
perform, based on the malfunction information being the performance malfunction, according to the malfunction identifier, monitoring on a processing device processing the malfunction information; and
acquire, in the processing device, the processing progress corresponding to the malfunction identifier, and send the processing progress to the vehicle.

In some possible embodiments, the apparatus is further configured to:
send an upgrade program corresponding to the malfunction information, where the upgrade program is used to perform an update processing on a system program of the vehicle.

In a possible embodiment, the apparatus is further configured to:
perform, according to the malfunction identifier, a monitoring processing on the processing device;
acquire, in the processing device, the upgrade program corresponding to the malfunction information; and
send the upgrade program to the vehicle.

The apparatus for processing malfunction provided by the embodiment of the present application can execute the technical solution shown in the above method embodiments. The implementation principle and beneficial effects thereof are similar, and will not be repeated here.

FIG. 9 is a schematic structure diagram of an electronic device provided by an embodiment of the present application. Please refer to FIG. 9, the electronic device 900 may include a processor 901 and a memory 902. For example, the processor 901, the memory 902, and various components are interconnected through a bus 903.

The memory 902 stores computer executable instructions;
the processor 901 executes the computer executable instructions stored in the memory 902, to enable the processor 901 to perform the method for processing malfunction as shown in the above-mentioned method embodiments.

Correspondingly, the electronic device may be a vehicle or a server.

Correspondingly, an embodiment of the present application provides a computer readable storage medium, where the computer readable storage medium stores computer executable instructions, when being executed by the processor, the computer executable instructions are used to implement the method for processing malfunction according to the above-mentioned method embodiments.

Correspondingly, an embodiment of the present application may also provide a computer product, including a computer program, when being executed by the processor, the computer program is used to implement the method for processing malfunction as shown in the above-mentioned method embodiments.

Those skilled in the art should understand that embodiments of the present invention can be provided as methods, systems, or computer program products. Therefore, the present invention can be implemented in the form of a fully hardware implementation, a fully software implementation, or a combination of software and hardware aspects. Moreover, the present invention may take the form of a computer program product implemented on one or more computer usable storage media (including but not limited to disk storage, CD-ROM, optical storage, etc.) including computer usable program code.

The present invention is described with reference to flowcharts and/or block diagrams of methods, devices (systems), and computer program products according to the embodiments of the present invention. It should be understood that each process and/or block in the flowchart(s) and/or block diagram(s), as well as the combination of processes and/or blocks in the flowchart(s) and/or block diagram(s), can be implemented by computer program instructions. These computer program instructions can be provided to a processor of a general-purpose computer, dedicated computer, embedded processor, or other programmable data processing device to generate a machine, such that the instructions executed by the processor of the computer(s) or other programmable data processing device(s) generate an apparatus for implementing a function specified in one or more processes in the flowchart(s) and/or one or more blocks in the block diagram(s).

These computer program instructions can also be stored in a computer readable memory that can guide a computer or other programmable data processing device to operate in a specific manner, so that the instructions stored in the computer readable memory produce a manufactured product including an instruction apparatus, the instruction implements a function specified in one or more processes in the flowchart(s) and/or one or more blocks in the block diagram(s).

These computer program instructions can also be loaded onto a computer or other programmable data processing device, so that a series of operational steps are executed on the computer or other programmable device to generate computer implemented processing. Therefore, the instructions executed on the computer or other programmable device provide steps for implementing a function specified in one or more processes in the flowchart(s) and/or one or more blocks in the block diagram(s).

In a typical configuration, a computing device includes one or more processors (CPUs), an input/output interface, a network interface, and a memory.

The memory may include a non-permanent storage, a random access memory (RAM) and/or a non-volatile memory in a computer readable medium, such as a read only memory (ROM) or a flash RAM (flash RAM). The memory is an example of the computer readable medium.

The computer readable medium includes a permanent medium and a non-permanent medium, a removable medium and an un-removable medium, can be used by any method or technology to achieve information storage. Information can be computer readable instructions, data structures, modules of programs, or other data. Examples of a storage media of a computer include, but are not limited to, a phase change memory (PRAM), a static random access memory (SRAM), a dynamic random access memory (DRAM), other types of random access memory (RAM), a read only memory (ROM), an electrically erasable programmable read only memory (EEPROM), a flash memory or other memory technologies, a read only optical disc read-only memory (CD-ROM), a digital versatile disc (DVD) or other optical storage, a magnetic tape cartridge, a magnetic tape storage or other magnetic storage device, or any other non-transmission medium, that can be used to store information that can be accessed by the computing device(s). According to the definition herein, the computer readable medium does not include a temporary computer readable medium (transitory media), such as a modulated data signal and carrier waves.

It should also be noted that the terms "including", "containing" or any other variation thereof are intended to encompass non-exclusive inclusion, such that a process, method, good or equipment that includes a series of elements not only includes those elements, but also includes other elements not explicitly listed, or also includes elements inherent to such process, method, good or equipment. Without further limitations, an element limited by the statement "including one..." does not exclude the existence of another identical element in the process, method, product, or device that includes the element.

The above are only embodiments of the present application and are not intended to limit the present application. For those skilled in the art, the present application may have various modifications and variations. Any modifications, equivalent substitutions, improvements, etc. made within the spirit and principles of the present application shall be included within the scope of the claims of the present application.

## Claims

1. A method for processing malfunction, applied to a vehicle, comprising:
acquiring malfunction information of a vehicle malfunction, and generating a malfunction identifier corresponding to the vehicle malfunction;
sending a malfunction processing request to a server, wherein the malfunction processing request comprises the malfunction identifier and the malfunction information, and the malfunction processing request is used to request a processing on the vehicle malfunction;
receiving, according to the malfunction identifier, a processing progress corresponding to the vehicle malfunction sent by the server; and
displaying the processing progress.

2. The method according to claim 1, wherein the acquiring the malfunction information of the vehicle malfunction comprises:
receiving an input instruction, wherein the input instruction is a speech input instruction and/or a detecting input instruction; and
acquiring the malfunction information according to the input instruction.

3. The method according to claim 2, wherein the input instruction is the detecting input instruction; wherein the acquiring the malfunction information according to the input instruction comprises:
performing, according to the detecting input instruction, a monitoring operation on a driving process of the vehicle, to obtain driving environment data and vehicle control data; and
obtaining, based on the driving environment data and the vehicle control data, the malfunction information.

4. The method according to claim 3, wherein the detecting input instruction comprises a detecting-started instruction and a detecting-finished instruction; wherein the performing, according to the detecting input instruction, the monitoring operation on the driving process of the vehicle, to obtain the driving environment data and the vehicle control data comprises:
performing, based on the detecting-started instruction, the monitoring operation on the driving process of the vehicle; and
finishing, based on the detecting-finished instruction, the monitoring operation on the driving process of the vehicle, to obtain the driving environment data and the vehicle control data within a first monitoring duration.

5. The method according to claim 2, wherein the input instruction is the speech input instruction; wherein the acquiring the malfunction information according to the input instruction comprises:
receiving, according to the speech input instruction, speech information, wherein the speech information is used to describe the automatic driving malfunction; and
performing a speech analysis processing on the speech information, to obtain the malfunction information, wherein the malfunction information is malfunction description text.

6. The method according to any one of claims 1 to 5, wherein the receiving, according to the malfunction identifier, the processing progress corresponding to the vehicle malfunction sent by the server comprises:
receiving, based on the malfunction information being a performance malfunction, the processing progress corresponding to the malfunction identifier, wherein the processing progress comprises a feedback label and a progress status corresponding to the feedback label, and the feedback label is used to indicate a malfunction processing task corresponding to the malfunction information.

7. The method according to any one of claims 1 to 6, further comprising:
receiving, based on the malfunction information being a non-performance malfunction, operation information corresponding to the malfunction identifier, wherein the operation information comprises a malfunction description of the vehicle malfunction and an operation indication corresponding to the vehicle malfunction.

8. The method according to any one of claims 1 to 7, further comprising:
receiving an upgrade program corresponding to the malfunction information, wherein the upgrade program is a program obtained after a malfunction processing is performed on at least one feedback malfunction within a preset duration, and the at least one feedback malfunction includes the vehicle malfunction; and
performing an update processing on a system program of the vehicle through the upgrade program.

9. A method for processing malfunction, applied to a server, comprising:
receiving a malfunction processing request of a vehicle, wherein the malfunction processing request is used to request to process a vehicle malfunction of the vehicle;
determining, according to the malfunction processing request, a processing progress corresponding to the vehicle malfunction; and
sending the processing progress to the vehicle.

10. The method according to claim 9, wherein the malfunction processing request comprises a malfunction identifier and malfunction information; wherein the determining, according to the malfunction processing request, the processing progress corresponding to the vehicle malfunction comprises:
sending, based on the malfunction information being a performance malfunction, the processing progress corresponding to the malfunction identifier to the vehicle; or,
sending, based on the malfunction information being a non-performance malfunction, operation information corresponding to the malfunction identifier to the vehicle.

11. The method according to claim 10, wherein the sending, based on the malfunction information being the performance malfunction, the processing progress corresponding to the malfunction identifier to the vehicle comprises:
performing, based on the malfunction information being the performance malfunction, according to the malfunction identifier, monitoring on a processing device processing the malfunction information; and
acquiring, in the processing device, the processing progress corresponding to the malfunction identifier, and sending the processing progress to the vehicle.

12. The method according to claim 11, further comprising:
sending an upgrade program corresponding to the malfunction information to the vehicle, wherein the upgrade program is used to perform an update processing on a system program of the vehicle.

13. The method according to claim 12, wherein the sending the upgrade program corresponding to the malfunction information to the vehicle comprises:
performing, according to the malfunction identifier, a monitoring processing on the processing device;
acquiring, in the processing device, the upgrade program corresponding to the malfunction information; and
sending the upgrade program to the vehicle.

14. An apparatus for processing malfunction, applied to a vehicle, wherein the apparatus for processing malfunction comprises an acquisition module, a first transmitting module, a first receiving module and a display module;
the acquisition module is specifically configured to: acquire malfunction information of a vehicle malfunction, and generate a malfunction identifier corresponding to the vehicle malfunction;
the first transmitting module is specifically configured to: send a malfunction processing request to a server, wherein the malfunction processing request comprises the malfunction identifier and the malfunction information, and the malfunction processing request is used to request a processing on the vehicle malfunction;
the first receiving module is specifically configured to: receive, according to the malfunction identifier, a processing progress corresponding to the vehicle malfunction sent by the server; and
the display module is specifically configured to: display the processing progress.

15. An apparatus for processing malfunction, applied to a server, comprising: a second receiving module, a determining module and a second transmitting module;
the second receiving module is configured to: receive a malfunction processing request of a vehicle, wherein the malfunction processing request is used to request to process a vehicle malfunction of the vehicle;
the determining module is configured to: determine, according to the malfunction processing request, a processing progress corresponding to the vehicle malfunction; and
the second transmitting module is configured to: send the processing progress to the vehicle.

16. An electronic device, comprising: a memory and a processor;
wherein the memory stores computer executable instructions;
the processor executes the computer executable instructions stored in the memory, to enable the processor to perform the method according to any one of claims 1 to 8, or the method according to any one of claims 9 to 13.

17. The electronic device according to claim 16, wherein the electronic device is a vehicle or a server.

18. A computer readable storage medium, wherein the computer readable storage medium stores computer executable instructions, when being executed by the processor, the computer executable instructions are used to implement the method according to any one of claims 1 to 8, or the method according to any one of claims 9 to 13.

19. A computer product, comprising a computer program, when being executed by the processor, the computer program is used to implement the method according to any one of claims 1 to 8, or the method according to any one of claims 9 to 13.
